# EUROPEAN PATENT SPECIFICATION

(11) **EP 3 256 407 B1**
(45) Date of publication and mention of the grant of the patent: **02.12.2020**
(21) Application number: 15823193.6
(22) Date of filing: 25.11.2015
(51) Int. Cl.: B65G 47/19, B65G 69/18, B65D 90/62, B65G 65/40

(54) **DEVICE FOR DISCHARGING POWDERY MATERIAL**
VORRICHTUNG ZUR AUSGABE VON PULVERFÖRMIGEM MATERIAL
DISPOSITIF PERMETTANT DE DÉCHARGER UN MATÉRIAU PULVÉRULENT

(30) Priority: 13.02.2015 IT MI20150035 U
(43) Date of publication of application: 20.12.2017
(73) Proprietor: Zanin F.lli S.R.L., 31032 Casale Sul Sile (IT)
(72) Inventor: ZANIN, Oscar, 31056 Roncade (IT)
(74) Representative: Modiano, Micaela Nadia
(86) International application number: PCT/IB2015/059127
(87) International publication number: WO 2016/128813

(56) References cited:
- EP-A1- 0 043 386
- CN-U- 203 840 918
- DE-B- 1 091 037
- DE-U1-202009 018 766
- FR-A1- 2 427 280
- JP-A- S59 102 726
- NL-A- 7 514 607
- US-A- 3 716 172
- US-A- 5 992 689

## Description

The present invention relates to a device for discharging powdery material which is of particular use in the loading of powdery materials and granules on all means of transport or in systems for movement, such as for example tank trucks.

One of the problems that such type of use has to deal with is substantially that of operating without emissions of dust.

Nowadays EP1699713B1 is known in which an apparatus is disclosed for discharging powdery material; such solution claims an apparatus for discharging material which is adapted to control the discharge of flowable material which is transported through a conical hopper, the hopper being configured and arranged, in use, to be useable at a height above a discharge heap, the apparatus including the hopper having an inlet opening adjacent to the top of the hopper and an open discharge outlet at the base of the hopper, the hopper being adapted to be suspended below a support frame by way of hopper support members, the discharge outlet being exposed to the surrounding environment such that, in use, flowable material is discharged through the open discharge outlet, and a valve means being configured and arranged in the hopper, the valve means being adapted to be suspended below the support frame and including a bulbous lower end portion with an inverted conical shape such that the bulbous lower end portion tapers toward a central point, the bulbous lower end portion being positionable adjacent to the discharge outlet forming a gap between the internal wall of the hopper and the bulbous lower end portion, for material that, in use, flows by gravity through and out from the open discharge outlet, the valve means and/or the hopper being adapted to move relative to each other, in use, in order to control the rate of continual discharge through the gap in order to form a solid column of material passing through, in order to reduce the quantity of dust that is dispersed in the surrounding environment.

Such known solution however suffers the drawback of not permitting an optimal reduction of the formation of dust which is thus still discharged outside the hopper through the discharge outlet.

Furthermore, the presence of the support frame, below which the apparatus is suspended, requires the use of support members for the hopper which are constituted by springs: when the product to be inserted in the hopper is changed, it is also necessary to calibrate it, which necessitates a plant shutdown and time to find the optimal solution for the product handled (for example wheat instead of sunflower seeds).

Furthermore the bulbous portion has a lower end which has an inverted conical shape: such shape does not make it possible to achieve an optimal closure of the discharge outlet, which thus remains slightly open even in the condition in which it should block the outflow of material.

Finally the valve means has, above the bulbous portion, a triangular superstructure: this shape structure causes problems because, once the hopper is filled until it reaches a certain weight, the outer lateral surface of the triangular superstructure generates a downward force that tends to make the discharge outlet open.

The document DE1091037 B discloses a device for discharging powdery material according to the preamble of claim 1.

The aim of the present invention is therefore to resolve the above mentioned technical problems, eliminating the drawbacks in the cited known art and therefore providing a device that makes it possible to achieve the discharge of powdery material through a hopper while at the same time preventing the outflow, together with the discharged material, of dust as well.

Within this aim, an object of the invention is to provide a device that makes it possible to achieve the discharge of powdery material through a hopper while preserving the integrity of the discharge outlet and preventing its accidental opening owing to the weight of the material contained in the hopper.

Another object of the invention is to provide a device that is structurally simple, is low cost, and can be made with the usual conventional systems.

This aim and these and other objects which will become better apparent hereinafter are achieved by a device for discharging powdery material according to the appended claim 1.

Further characteristics and advantages of the invention will become better apparent from the detailed description of a particular, but not exclusive, embodiment, which is illustrated by way of non-limiting example in the accompanying drawings wherein:

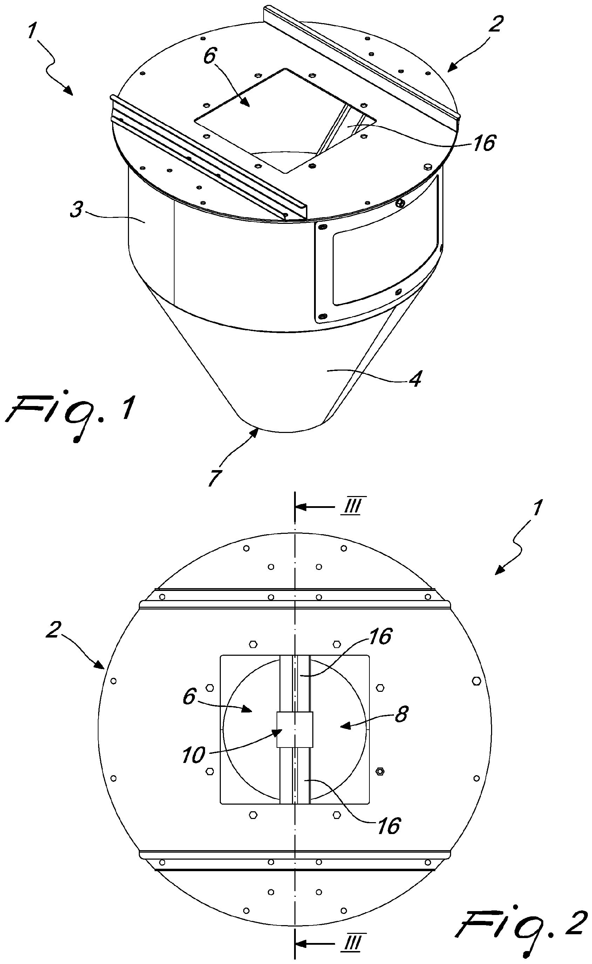

Figure 1 is a first perspective view of a device according to the invention;
Figure 2 is a view from above of the device;

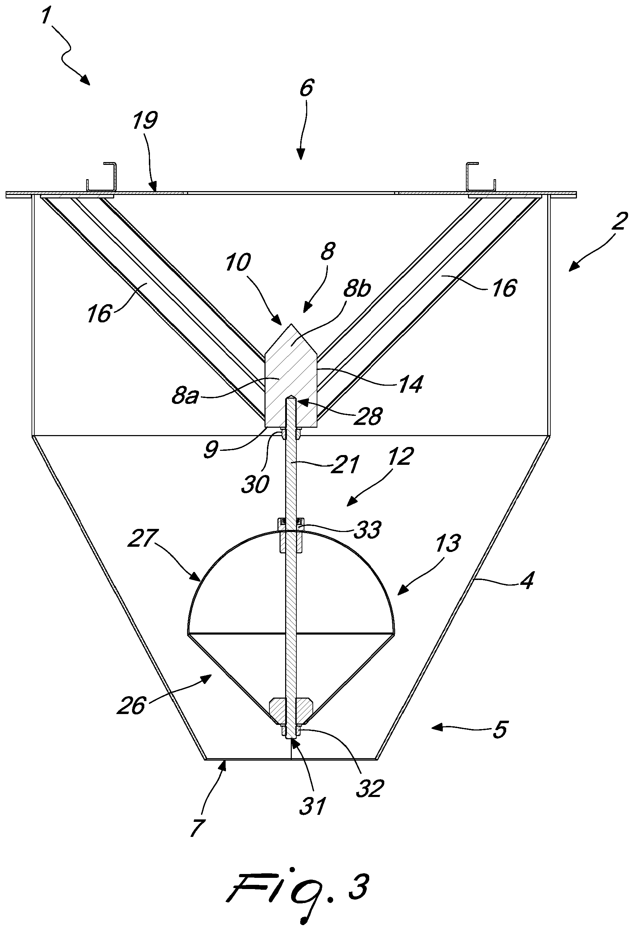

Figure 3 is a cross-sectional view taken along the line III-III in Figure 2;

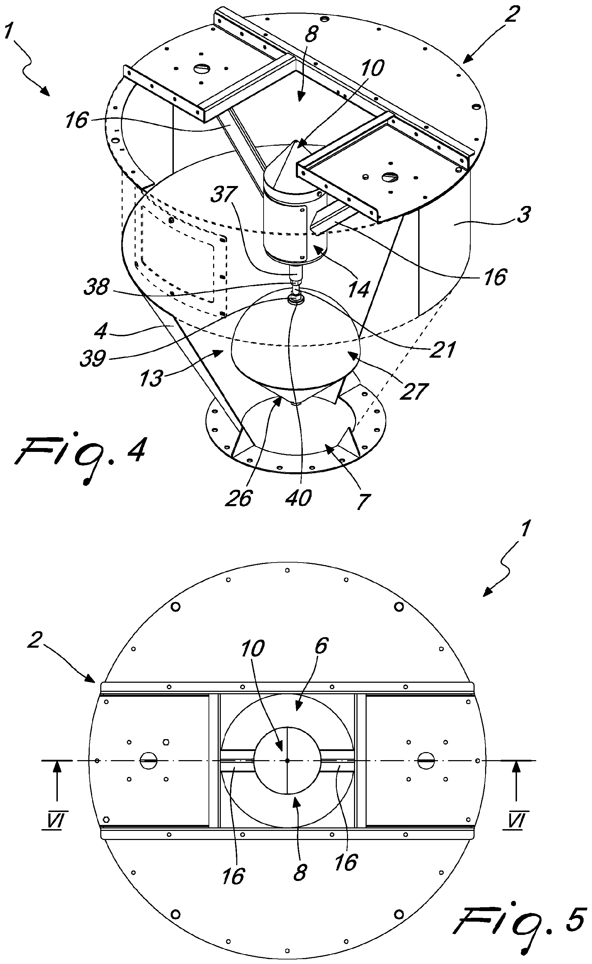

Figure 4 is a partially cutaway perspective view of the device;
Figure 5 is a view from above of the device in the previous figure;

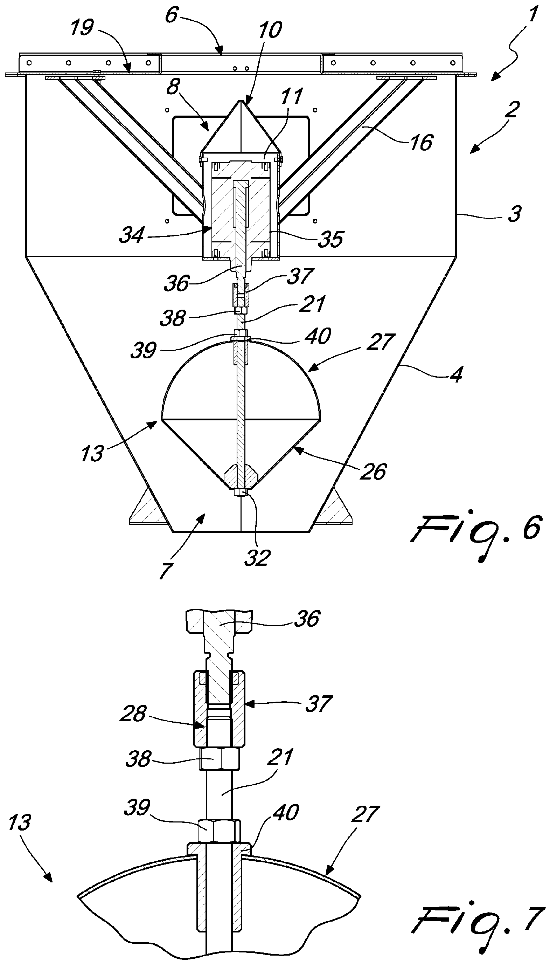

Figure 6 is a cross-sectional view taken along the line VI-VI in Figure 5;
Figure 7 is a view of a detail of the device;

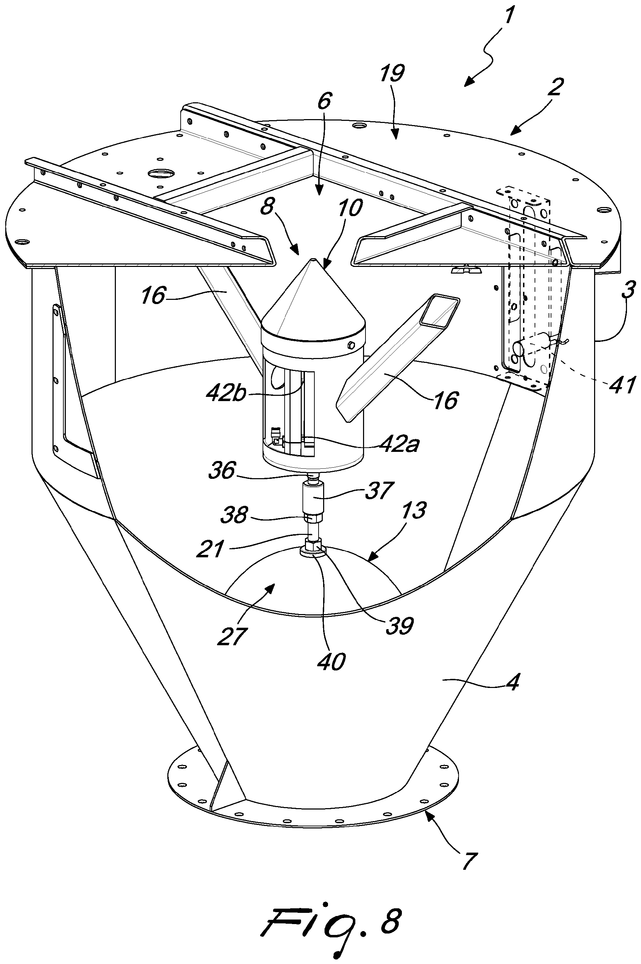

Figure 8 is a further partially cutaway perspective view of the device;
Figures 9 to 14 show in three views, of which one is a view from above, one a side view and one a cross-sectional view taken along the line XIV-XIV in Figure 12, of an exemplary embodiment of a device for discharging powdery material not according to the invention.

In the embodiments illustrated, individual characteristics shown in relation to specific examples may in reality be interchanged with other, different characteristics, existing in other exemplary embodiments.

With reference to the figures, the reference numeral 1 generally designates a device for discharging powdery material which is constituted by a hopper 2, which is fixed and constituted by a cylindrical first enclosure 3 overlying a frustum-shaped second enclosure 4 with the vertex 5 directed downwardly.

At and axially with respect to the first enclosure 3, there is an upper loading opening 6 which is polygonal, preferably square, in plan view.

At the second enclosure 4 there is, at the vertex 5, a lower discharge opening 7 for discharging the powdery material, which in plan view is prefereably circular.

Inside the fixed hopper 2 there is, at the first enclosure 3 and below the upper opening 6, a dispersion element 8 of the powdery material.

The dispersion element 8 is arranged in axial alignment with the upper loading opening 6 and is ogive-shaped so as to define a cylindrical body 8a with a flat base 9 and a tip 8b the vertex 10 of which is directed toward the upper loading opening 6.

The dispersion element 8 interacts with means 12 adapted to allow the manual or automatic vertical movement of a valve 13 for closure or throttling.

The outer lateral surface 14 of the dispersion element 8 is coupled to the inner lateral surface 18 of the upper wall 19 of the first enclosure 3 by way of adapted supports 16, which are arranged inclined.

The diameter of the base 9 is smaller than the projection thereon of the upper opening 6.

The valve 13 is shaped substantially like an upside-down ogive so as to define a tip 26, with the vertex radiused and directed toward the lower discharge opening 7 for discharging the powdery material, and a body 27, which is substantially hemispherical and directed toward the upper loading opening 6.

The means 12 adapted to allow the manual vertical movement of the closure or throttling valve 13 are constituted by a threaded first screw 21 of which a first end 28, directed toward the upper loading opening 6, is associated within a complementarily-threaded seat provided on the flat base 9 of the dispersion element 8.

A first complementarily-threaded nut 30 locks the first screw 21 at the base 9 of the dispersion element 8.

Alternatively, the first end 28 of the first screw 21 is welded to the base 9.

The second end 31 of the first screw 21 protrudes freely beyond the tip 26 and is associated therewith, in a preset position, by way of the use of an adapted second complementarily-threaded nut 32 which abuts against the outer lateral surface of the tip 26.

The first screw 21 further passes freely at an adapted hole provided axially with respect to the body 27 of the valve 13, and is associated therewith by way of an adapted first bush 33 for guiding which is provided with an adapted dustproof gasket.

The adjustment of the positioning of the second nut 32 and of the first bush 33 makes it possible to define the desired positioning of the valve 13 inside the second enclosure 4.

The position that the valve 13 is made to assume depends on the material being handled and no external controls are required in order to indicate its position.

The means 12 adapted to allow the automatic vertical movement of the closure or throttling valve 9 are constituted by a pneumatic cylinder 34 arranged inside the receptacle 11 provided inside the dispersion element 8, which in this case is therefore internally hollow.

The pneumatic cylinder 34 is constituted by a body 35 within which a stem 36 is slideably associated and can extend and retract in the direction of the lower opening 7.

The end tip of the stem 36 is interconnected, by way of a second bush 37, with the first screw 21, while a third complementarily-threaded nut 38 locks the mutual position thereof.

The first screw 21 still passes through the body 27 of the valve 13 and is locked, at its second end 31, by the second nut 32.

The second nut 32 and a fourth nut 39, which is arranged adjacent to the first end 28 of the first screw 21 with the interposition of a T-shaped sleeve 40, clamp the valve 13 in the manner of a vise.

There is further a sensor 41 arranged on the outer lateral surface of the first enclosure 3 in a region proximate to the interconnection with the second enclosure 4: the sensor 41 checks, inside the hopper 2, the fill level thereof and causes, by way of an adapted centralized logic, the travel of the stem 36 so as to optimize the discharge of powdery material.

Such travel of the stem 36 is delimited by adapted magnetic stroke limiters 42a, 42b which are associated with the pneumatic cylinder 34.

The magnetic stroke limiters 42a, 42b make it possible to control the vertical movement of the valve 13. A preset level of product is always kept inside the hopper 2. The sensor 41 is paired with a timer that controls the movement of the stem 36 on the basis of preset data for the product being processed; depending in fact on whether it is maize, or sunflower seeds or soya beans etc. that is being processed, a time can be set for the product to fall inside the hopper 2.

In the automatic vertical movement of the closure or throttling valve 9, the level sensor 41 advantageously works with the timer; when the powdery product triggers the sensor 41 because it has reached a determined level, the timer starts and after a set time it makes the stem 36 of the pneumatic cylinder 34 move.

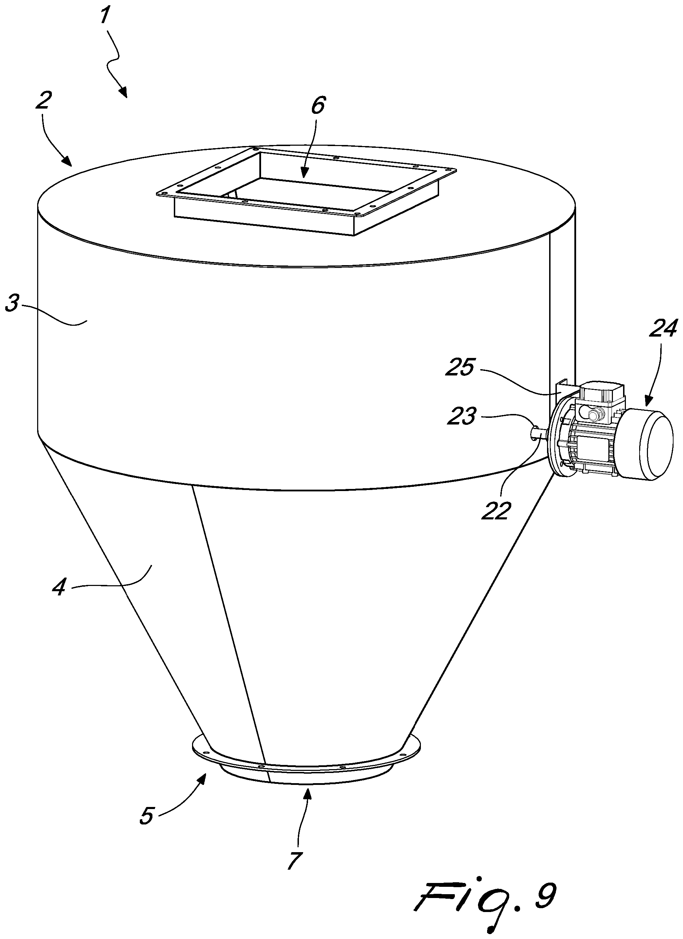

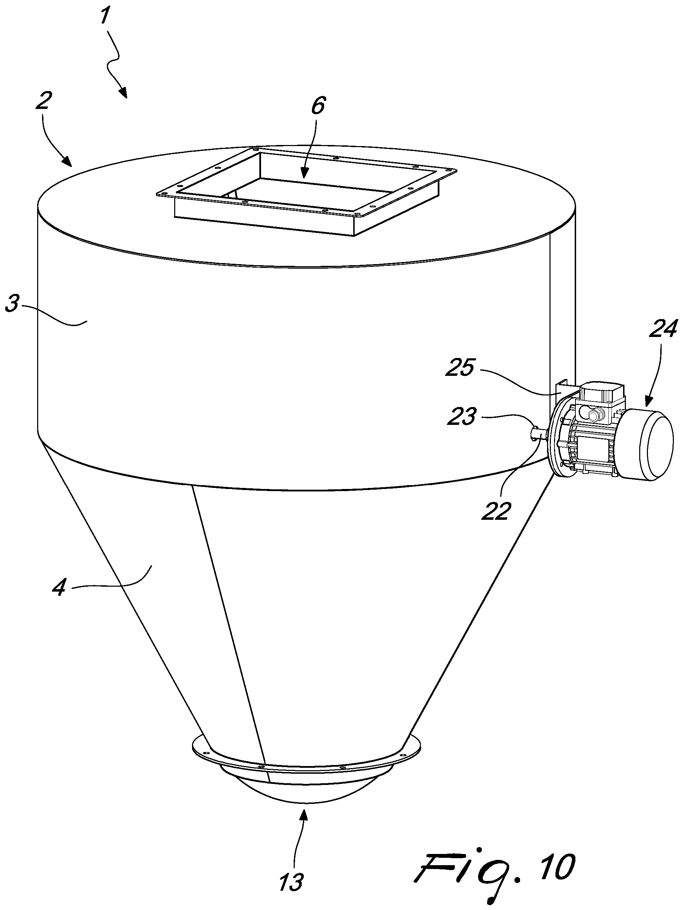

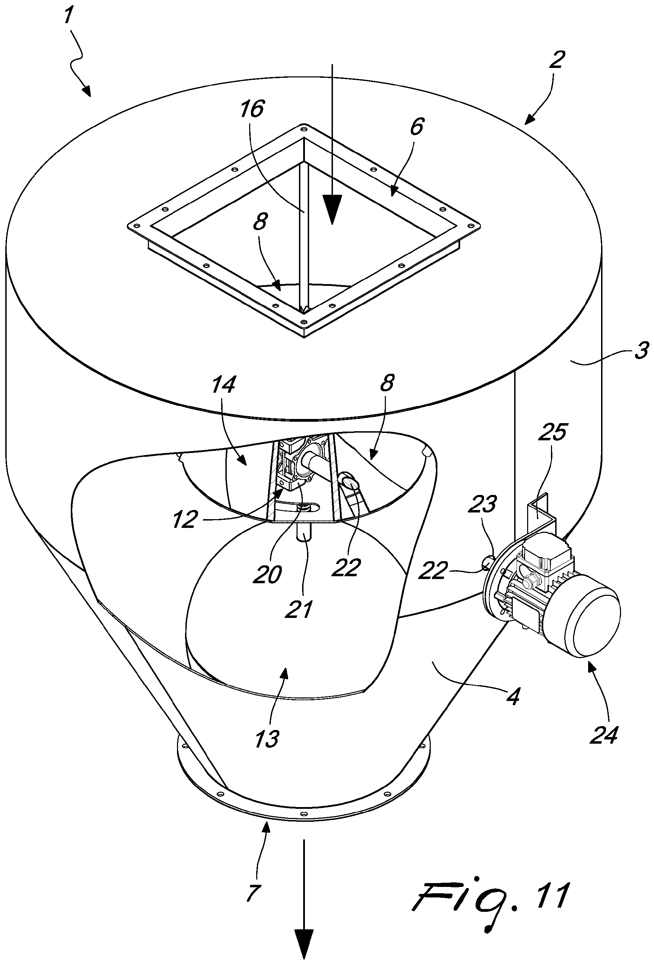

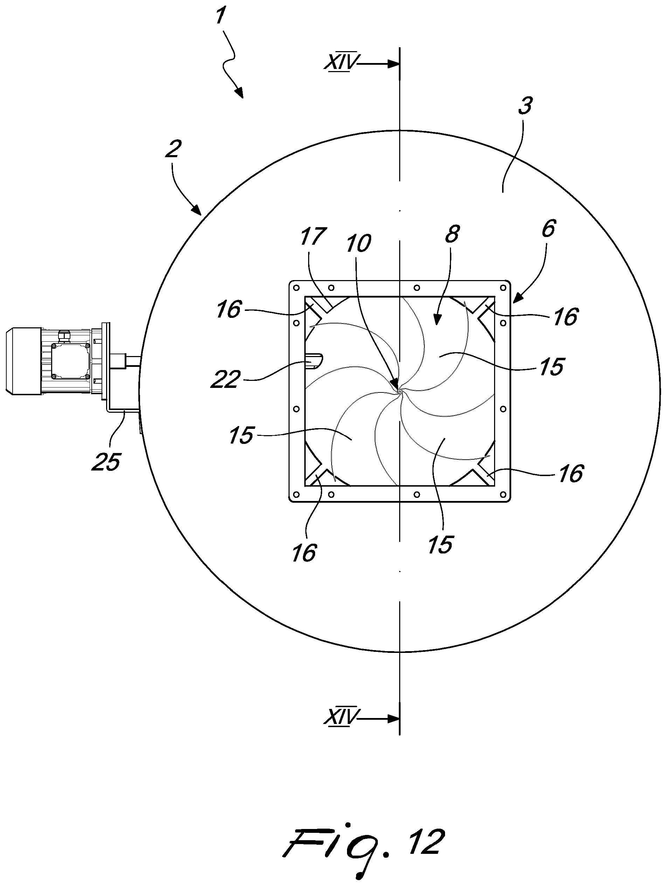

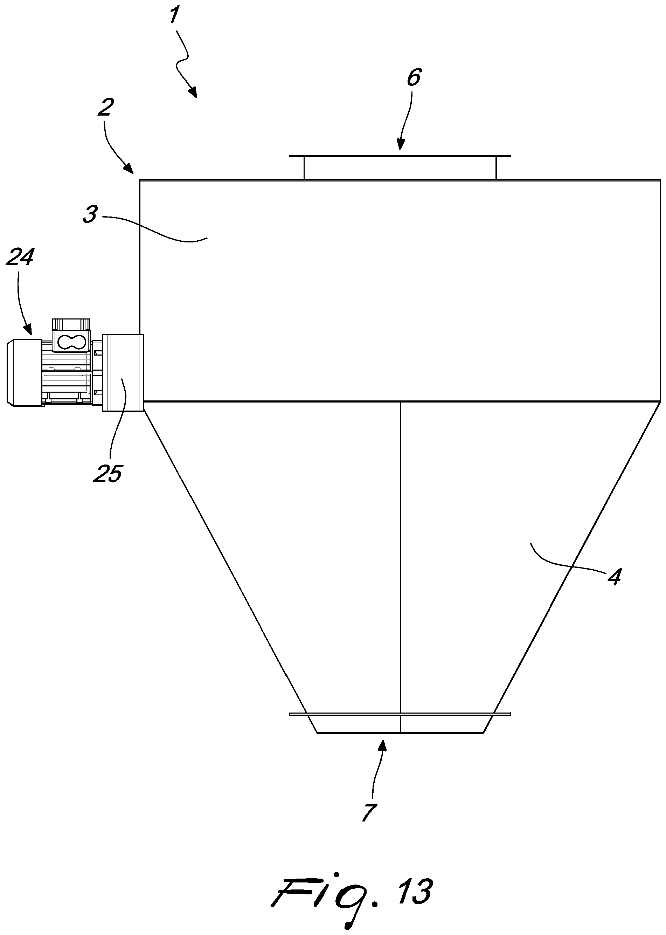

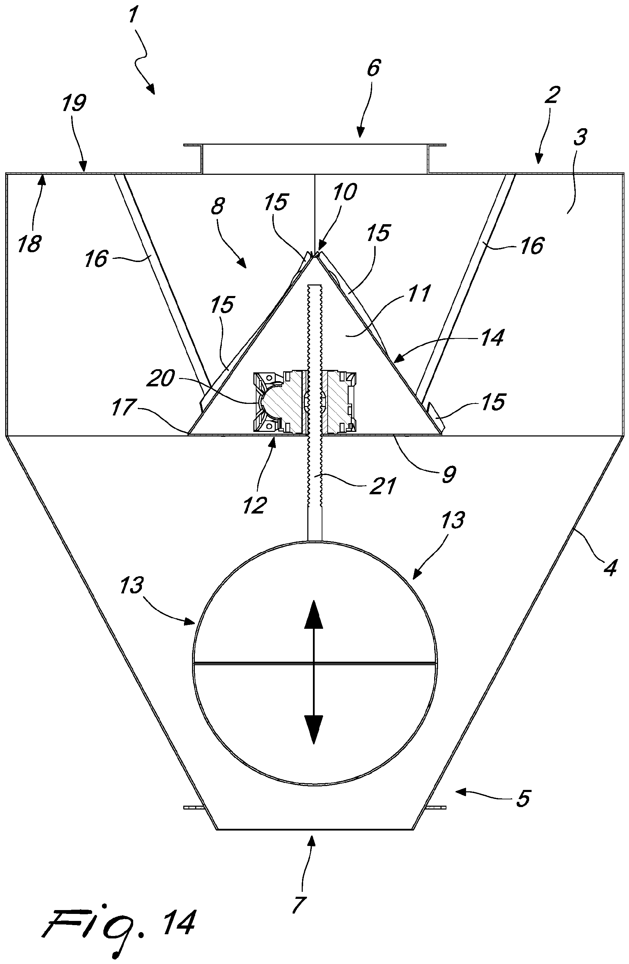

In the embodiment shown in Figures 9 to 14, which is not according to the invention, the reference numeral 1 generally designates a device for discharging powdery material in which the dispersion element 8 is, in the particular embodiment shown, substantially conical and its base 9 lies substantially at the plane of division between the first enclosure and the second enclosure 3, 4.

The dispersion element 8 in turn has a vertex 10 directed in the direction of the overlying upper loading opening 6, the height of the cone that constitutes the dispersion element 8 coinciding substantially with the central axis of the upper loading opening 6.

The dispersion element 8 is internally hollow so as to define a receptacle 11 for means 12 adapted to allow the vertical movement of the closure or throttling valve 13.

At the outer lateral surface 14 of the dispersion element 8 there is a plurality of wings 15 which, starting from the vertex 10, extend according to a helical pattern in the direction of the base 9.

Advantageously the dispersion element 8 is also supported by way of adapted supports or brackets or bars 16 which connect the perimetric edge 17 of the base 9 to the overlying inner lateral surface 18 of the upper wall 19 of the first enclosure 3.

Advantageously the diameter of the base 9 is, at least partially, slightly greater than the projection thereon of the upper opening 6.

The means 12 adapted to allow the vertical movement of the closure or throttling valve 13 are constituted by a gearmotor 20 which is adapted to move an adapted first screw 21 which has an axis that coincides substantially with the height of the dispersion element 8.

The gearmotor 20 is actuated by way of an adapted shaft 22 which is arranged along an axis that is perpendicular to that of the first screw 21 and protrudes outside the hopper 2 through an adapted opening 23 provided on the outer lateral surface of the first enclosure 3.

The shaft 22 is connected to an adapted motor 24 which is supported, by way of an adapted bracket 25, on the outer lateral surface of the first enclosure 3.

The end of the first screw 21 which is directed in the direction of the discharge opening 7 is associated with the closure or throttling valve 13, which has the shape of a solid, preferably a sphere with a diameter that is greater than the diameter of the lower discharge opening 7.

Thus it has been found that the invention fully achieves the intended aim and objects, in that a device has been obtained which makes it possible to achieve the discharge of powdery material which, thanks also to the presence of the dispersion element, is forced to flow with radial dispersion inside the hopper proper so as to achieve the optimal distribution of the material inside it, while preventing the formation and outflow, together with the discharged material, of dust.

Use of the means 12 makes it possible to adjust, manually or automatically, the vertical movement of the closure or throttling valve 13 which makes it possible to optimally adjust, slow or close the flow of the product as a function of the flow-rate and/or of its specific weight and/or of its type, all in a very rapid and simple manner.

Furthermore the invention, by providing for the use of a hopper that is fixed, and therefore without springs, can be used for loading bins and tanks for trucks or goods wagons of trains or holds of ships, or it can be applied to discharge pipes.

Last but not least, the invention is structurally simple and low cost.

Obviously, the invention is susceptible of numerous modifications and variations, all of which are within the scope of the appended claims.

Obviously the materials used as well as the dimensions of the individual components of the invention may be more relevant according to specific requirements. The characteristics indicated above as advantageous, convenient or the like, may also be missing or be substituted by equivalent characteristics.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A device (1) for discharging powdery material, constituted by a hopper (2) provided with an upper loading opening (6) and with a lower discharge opening (7) and provided internally with a valve (13) for temporary closure or throttling of said discharge opening (7), wherein inside said hopper (2), which is fixed, there are means (12) adapted to allow and control the manual or automatic vertical movement of said valve (13) and at least one element (8) for radial dispersion of the powdery material which is arranged below said upper loading opening (6) and accommodates or does not accommodate said means (12), said hopper (2) being constituted by a first cylindrical enclosure (3) which lies above a second enclosure (4) which is frustum-shaped with the vertex (5) directed downwardly, inside said fixed hopper (2) there being, at said first enclosure (3) and below said upper opening (6), said element (8) for dispersion of the powdery material which is arranged axially with respect to said upper loading opening (6) and is ogive-shaped so as to define a cylindrical body (8a) with a flat base (9) and a tip (8b) the vertex (10) of which is directed toward said upper loading opening (6), the outer lateral surface (14) of said element (8) being coupled to the inner surface (18) of the upper wall (19) of said first enclosure (3) by way of adapted supports or brackets or bars (16), which are arranged inclined, the diameter of said base (9) being smaller than the projection thereon of said upper opening (6); said dispersion element (8) interacting with said means (12) adapted to allow the manual or automatic vertical movement of said valve (13);
**characterized in that** said valve (13) is shaped substantially like an upside-down ogive so as to define a tip (26), with the vertex radiused and directed toward said lower discharge opening (7) for discharging the powdery material, and a body (27), which is substantially hemispherical and directed toward said upper loading opening (6).

2. The device according to claim 1, **characterized in that** said means (12) are constituted by a threaded first screw (21) of which a first end (28), directed toward said upper loading opening (6), is associated within a complementarily-threaded seat provided on said flat base (9) of said dispersion element (8), a first complementarily-threaded nut (30) locking said first screw (21) at said base (9) of said dispersion element (8).

3. The device according to claim 1, **characterized in that** said means (12) are constituted by a threaded first screw (21) of which a first end (28), directed toward said upper loading opening (6), is associated within a complementarily-threaded seat provided on said flat base (9) of said dispersion element (8), said first end (28) of said first screw (21) being welded to said base (9).

4. The device according to claim 2 or 3, **characterized in that** a second end (31) of said first screw (21) protrudes freely beyond said tip (26) and is associated therewith, in a preset position, by way of the use of an adapted second complementarily-threaded nut (32) which abuts against the outer lateral surface of said tip (26), said first screw (21) passing freely at an adapted hole which is provided axially with respect to said body (27) of said valve (13), and being associated therewith by way of an adapted first bush (33) for guiding which is provided with an adapted dustproof gasket.

5. The device according to claim 4, **characterized in that** said means (12) which are adapted to allow the automatic vertical movement of said closure or throttling valve (13) are constituted by a pneumatic cylinder (34) arranged inside a receptacle (11) provided inside said dispersion element (8), said pneumatic cylinder (34) being constituted by a body (35) within which a stem (36) is slideably associated and can extend and retract in the direction of said lower opening (7), the end tip of said stem (36) being interconnected, by way of a second bush (37), with said first screw (21), while a third complementarily-threaded nut (38) locks the mutual position thereof, said first screw (21) passing through said body (27) and being locked, at its second end (31), by said second nut (32) which, together with a fourth nut (39), which is arranged adjacent to the first end (28) of said first screw (21) with the interposition of a T-shaped sleeve (40), clamp said valve (13) in the manner of a vise.

6. The device according to claim 5, **characterized in that** it comprises a sensor (41) arranged on the outer lateral surface of said first enclosure (3) in a region proximate to the interconnection with said second enclosure (4), said sensor (41) checking, inside said hopper (2), the fill level thereof and causing, by way of a centralized logic, the travel of said stem (36) so as to optimize the discharge of powdery material, said travel of said stem (36) being delimited by adapted magnetic stroke limiters (42a, 42b) which are associated with said pneumatic cylinder (34).

7. The device according to claim 6, **characterized in that** said sensor (41) is paired with a timer that controls the movement of said stem (36) on the basis of preset data for the product being processed.

## Patentansprüche

1. Eine Vorrichtung (1) zur Ausgabe von pulverförmigem Material bestehend aus einem Trichter (2), der mit einer oberen Beschickungsöffnung (6) und mit einer unteren Abgabeöffnung (7) und innen mit einem Ventil (13) für den vorübergehenden Verschluss oder die Drosselung der Abgabeöffnung (7) ausgestattet ist, wobei sich innerhalb des Trichters (2) der fest steht, Mittel (12) befinden, die ausgebildet sind, um die manuelle oder automatische vertikale Bewegung des Ventils (13) zu ermöglichen und zu steuern und mindestens ein Element (8) für die radiale Dispersion des pulverförmigen Materials, das sich unterhalb der oberen Beschickungsöffnung (6) befindet und die Mittel (12) enthalten kann oder auch nicht, wobei der Trichter (2) aus einem ersten zylindrischen Gehäuse (3) besteht, dass sich oberhalb eines zweiten Gehäuses (4) befindet, welches kegelstumpfförmig ist, wobei die Spitze (5) nach unten gerichtet ist, wobei sich innerhalb des festen Trichters (4) an dem ersten Gehäuse (3) und unterhalb der oberen Öffnung (6) das Element (8) zur Dispersion des pulverförmigen Materials befindet, welches axial zu der oberen Beschickungsöffnung (6) angeordnet und spitzkegelförmig ist, um einen zylindrischen Körper (8a) mit einer flachen Basis (9) und einer Spitze (8b) zu bestimmen, deren Scheitelpunkt (10) zur oberen Beschickungsöffnung (6) hin gerichtet ist, wobei die äußere Seitenfläche (14) des Elements (8) mit der inneren Oberfläche (18), der oberen Wand (19), des ersten Gehäuses (3) durch geeignete Stützen, Träger oder Stangen (16) gekoppelt ist, die schräg angeordnet sind, wobei der Durchmesser der Basis (9) kleiner ist als die Projektion der oberen Öffnung (6) darauf, wobei das Dispersionselement (8) mit den Mitteln (12) zusammenwirkt, die ausgebildet sind, um die manuelle oder automatische vertikale Bewegung des Ventils (13) zu ermöglichen;
**dadurch gekennzeichnet, dass** das Ventil (13) im Wesentlichen wie ein umgekehrter Spitzkegel geformt ist, um eine Spitze (26) zu bestimmen, wobei der Scheitelpunkt gerundet und zur unteren Abgabeöffnung (7) hin gerichtet ist, um das pulverförmige Material abzulassen und einen Körper (27), der im Wesentlichen halbkugelförmig und zur oberen Beschickungsöffnung (6) hin gerichtet ist.

2. Die Vorrichtung gemäß Anspruch 1, **dadurch gekennzeichnet, dass** die Mittel (12) aus einer ersten Gewindeschraube (21) bestehen, deren erstes Ende (28) das zu der oberen Beschickungsöffnung (6) hin gerichtet ist mit einem mit komplementärem Gewinde ausgestatteten Sitz verbunden ist, der an der flachen Basis (9) des Dispersionselement (8) angebracht ist, wobei eine erste Mutter (30) mit komplementärem Gewinde die erste Schraube (21) an der Basis (9) des Dispersionselement (8) blockiert.

3. Die Vorrichtung gemäß Anspruch 1, **dadurch gekennzeichnet, dass** die Mittel (12) aus einer ersten Gewindeschraube (21) bestehen, deren erstes Ende (28) das zu der oberen Beschickungsöffnung (6) hin gerichtet ist mit einem mit komplementärem Gewinde versehenen Sitz verbunden ist, der an der flachen Basis (9) des Dispersionselements (8) angebracht ist, wobei das erste Ende (28) der ersten Schraube (21) mit der Basis (9) verschweißt ist.

4. Die Vorrichtung gemäß Anspruch 2 oder 3, **dadurch gekennzeichnet, dass** ein zweites Ende (31) der ersten Schraube (21) frei über die Spitze (26) hinausragt und damit in einer vordefinierten Position über eine geeignete zweite Mutter (32) mit komplementärem Gewinde verbunden ist, die an der äußeren Seitenfläche der Spitze (26) anliegt, wobei die erste Schraube (21) frei an einer geeigneten Öffnung durchdringt, die axial zu dem Körper (27) des Ventils (13) angebracht ist, und damit durch eine geeignete Buchse (33) zur Führung verbunden ist, welche mit einer geeigneten staubdichten Dichtung versehen ist.

5. Die Vorrichtung gemäß Anspruch 4, **dadurch gekennzeichnet, dass** die Mittel (12) die ausgebildet sind, um die automatische vertikale Bewegung des Verschluss- oder Drosselventils (13) zu ermöglichen aus einem Pneumatikzylinder (34) bestehen, der in einem Behälter (11) angeordnet ist, welcher sich innerhalb des Dispersionselements (8) befindet, wobei der Pneumatikzylinder (34) aus einem Körper (35) besteht, mit welchem ein Schaft (36) verschiebbar verbunden ist, der sich in Richtung der unteren Öffnung (7) ausziehen und zurückziehen kann, wobei die Endspitze des Schafts (36) über eine zweite Buchse (37) mit der ersten Schraube (21) verbunden ist, während eine dritte Mutter (38) mit komplementärem Gewinde, deren Position zueinander blockiert, wobei die erste Schraube (21) durch den Körper (27) verläuft und an ihrem zweiten Ende (31) von der zweiten Mutter (32) blockiert ist, welche gemeinsam mit einer vierten Mutter (39) die nahe dem ersten Ende (28) der ersten Schraube (21) mit Anordnung einer T-förmigen Hülse (40) dazwischen, das Ventil (13) in der Art eines Schraubstocks klemmt.

6. Die Vorrichtung gemäß Anspruch 5, **dadurch gekennzeichnet, dass** sie einen Sensor (41) umfasst, der an der äußeren Seitenfläche des ersten Gehäuses (3) in einem Bereich nahe der Verbindung mit dem zweiten Gehäuse (4) angeordnet ist, wobei der Sensor (41) in dem Trichter (2) die Füllhöhe desselben überprüft und über eine zentrale Logikschaltung den Hub des Schafts (36) auslöst, um die Abgabe von pulverförmigen Material zu optimieren, wobei der Hub des Schafts (36) durch geeignete magnetische Hubbegrenzer (42a, 42b) begrenzt ist, die mit dem Pneumatikzylinder (34) verbunden sind.

7. Die Vorrichtung gemäß Anspruch 6, **dadurch gekennzeichnet, dass** der Sensor (41) mit einer Zeitsteuerung gekoppelt ist, die die Bewegung des Schafts (36) auf der Grundlage vordefinierter Daten für das verarbeitete Produkt steuert.

## Revendications

1. Dispositif (1) destiné à décharger un matériau pulvérulent, constitué d'une trémie (2) pourvue d'une ouverture de chargement supérieure (6) et d'une ouverture de déchargement inférieure (7) et pourvue intérieurement d'une vanne (13) pour la fermeture ou l'étranglement temporaire de ladite ouverture de déchargement (7), dans lequel à l'intérieur de ladite trémie (2), qui est fixe, sont agencés des moyens (12) adaptés pour permettre et commander le mouvement vertical manuel ou automatique de ladite vanne (13) et au moins un élément (8) pour la dispersion radiale du matériau pulvérulent qui est agencé sous ladite ouverture de chargement supérieure (6) et reçoit ou ne reçoit pas lesdits moyens (12), ladite trémie (2) étant constituée d'une première enveloppe cylindrique (3) qui se situe au-dessus d'une seconde enveloppe (4) qui est de forme tronconique avec le sommet (5) dirigé vers le bas, à l'intérieur de ladite trémie fixe (2) étant agencé, sur ladite première enveloppe (3) et sous ladite ouverture supérieure (6), ledit élément (8) pour la dispersion du matériau pulvérulent qui est agencé axialement par rapport à ladite ouverture de chargement supérieure (6) et est en forme d'ogive de manière à définir un corps cylindrique (8a) avec une base plate (9) et une pointe (8b) dont le sommet (10) est dirigé vers ladite ouverture de chargement supérieure (6), la surface latérale extérieure (14) dudit élément (8) étant couplée à la surface intérieure (18) de la paroi supérieure (19) de ladite première enveloppe (3) au moyen de supports adaptés ou d'équerres ou de barres (16), qui sont agencés inclinés, le diamètre de ladite base (9) étant plus petit que la projection sur celle-ci de ladite ouverture supérieure (6), ledit élément de dispersion (8) interagissant avec lesdits moyens (12) adaptés pour permettre le mouvement vertical manuel ou automatique de ladite vanne (13),
**caractérisé en ce que** ladite vanne (13) est formée pratiquement comme une ogive inversée de manière à définir une pointe (26), avec le sommet arrondi et dirigé vers ladite ouverture de déchargement inférieure (7) pour décharger le matériau pulvérulent, et un corps (27), qui est sensiblement hémisphérique et dirigé vers ladite ouverture de chargement supérieure (6).

2. Dispositif selon la revendication 1, **caractérisé en ce que** lesdits moyens (12) sont constitués d'une première vis filetée (21) dont une première extrémité (28), dirigée vers ladite ouverture de chargement supérieure (6), est associée à l'intérieur d'un logement fileté de manière complémentaire agencé sur ladite base plate (9) dudit élément de dispersion (8), un premier écrou (30) fileté de manière complémentaire bloquant ladite première vis (21) sur ladite base (9) dudit élément de dispersion (8).

3. Dispositif selon la revendication 1, **caractérisé en ce que** lesdits moyens (12) sont constitués d'une première vis filetée (21) dont une première extrémité (28), dirigée vers ladite ouverture de chargement supérieure (6), est associée à l'intérieur d'un logement fileté de manière complémentaire agencé sur ladite base plate (9) dudit élément de dispersion (8), ladite première extrémité (28) de ladite première vis (21) étant soudée à ladite base (9).

4. Dispositif selon la revendication 2 ou 3, **caractérisé en ce qu'**une seconde extrémité (31) de ladite première vis (21) fait saillie librement au-delà de ladite pointe (26) et est associée à celle-ci, dans une position préréglée, par l'utilisation d'un deuxième écrou (32) adapté, fileté de manière complémentaire, qui vient en butée contre la surface latérale extérieure de ladite pointe (26), ladite première vis (21) passant librement sur un trou adapté qui est agencé axialement par rapport audit corps (27) de ladite vanne (13), et étant associée à celui-ci au moyen d'une première douille (33) adaptée pour le guidage qui est munie d'un joint adapté étanche aux poussières.

5. Dispositif selon la revendication 4, **caractérisé en ce que** lesdits moyens (12) qui sont adaptés pour permettre le mouvement vertical automatique de ladite vanne de fermeture ou d'étranglement (13) sont constitués d'un vérin pneumatique (34) agencé à l'intérieur d'un logement (11) prévu à l'intérieur dudit élément de dispersion (8), ledit vérin pneumatique (34) étant constitué d'un corps (35) à l'intérieur duquel une tige (36) est associée de manière coulissante et peut s'étendre et se rétracter dans la direction de ladite ouverture inférieure (7), l'embout d'extrémité de ladite tige (36) étant interconnecté, au moyen d'une seconde douille (37), à ladite première vis (21), alors qu'un troisième écrou (38) fileté de manière complémentaire bloque la position mutuelle de celle-ci, ladite première vis (21) passant à travers ledit corps (27) et étant bloquée, à sa seconde extrémité (31), par ledit deuxième écrou (32) qui, en association avec un quatrième écrou (39), est agencé au voisinage de la première extrémité (28) de ladite première vis (21) avec l'interposition d'un manchon en forme de T (40), en serrant ladite vanne (13) à la manière d'un étau.

6. Dispositif selon la revendication 5, **caractérisé en ce qu'**il comporte un capteur (41) agencé sur la surface latérale extérieure de ladite première enveloppe (3) dans une zone proche de l'interconnexion avec ladite seconde enveloppe (4), ledit capteur (41) contrôlant, à l'intérieur de ladite trémie (2), le niveau de remplissage de celle-ci et entraînant, au moyen d'une logique centralisée, le déplacement de ladite tige (36) de manière à optimiser le déchargement de matériau pulvérulent, ledit déplacement de ladite tige (36) étant délimité par des limiteurs de course magnétiques (42a, 42b) adaptés qui sont associés audit vérin pneumatique (34).

7. Dispositif selon la revendication 6, **caractérisé en ce que** ledit capteur (41) est apparié à une temporisation qui commande le mouvement de ladite tige (36) sur la base de données prédéfinies pour le produit en cours de traitement.
